# DEMANDE DE BREVET EUROPEEN

(11) **EP 0 998 104 A1**
(43) Date de publication de la demande: **03.05.2000**
(21) Numéro de dépôt: 99203508.9
(22) Date de dépôt: 25.10.1999
(51) Int. Cl.: H04M 1/72, H04Q 7/32

(54) **Dispositif à vibreur pour la détection d'un appel entrant dans un combiné de téléphone mobile**

(30) Priorité: 30.10.1998 FR 9813698
(71) Demandeur: Koninklijke Philips Electronics N.V., 5621 BA Eindhoven (NL)
(72) Inventeur: Herrouin, Didier, Société Civile S.P.I.D., 75008 Paris (FR); Querrec, Jérôme, Société Civile S.P.I.D., 75008 Paris (FR)
(74) Mandataire: Pyronnet, Jacques

(57) **Abrégé**

Dispositif à vibreur (1) pour la signalisation tactile d'un appel entrant, dans un combiné de téléphone mobile numérique (non représenté), comportant une source d'énergie électrique (3) à fournir à un moteur électrique actionnant un vibreur (5). Selon l'invention, ce dispositif comporte en outre une antenne (7) destinée à capter, à proximité immédiate du combiné les impulsions d'émission (11) porteuses d'information numérique à haute fréquence dudit combiné et un circuit électronique (8) qui sélectionne dans ladite émission le signal à basse fréquence de récurrence desdites impulsions d'émission (11) et qui, après amplification dudit signal à basse fréquence, actionne ledit moteur électrique (2).
Application : téléphonie cellulaire.

## Description

La présente invention concerne un dispositif à vibreur pour la signalisation tactile d'un appel entrant, dans un combiné de téléphone mobile numérique, comportant une source d'énergie électrique à fournir à un moteur électrique actionnant un vibreur.

L'invention concerne plus précisément le domaine technique de la téléphonie mobile, notamment les téléphones cellulaires, du type GSM ou DCS par exemple et aussi certains téléphones dits sans fil ou résidentiels à la norme DECT par exemple. Ces différents types de téléphones sont dénommés mobiles dans la suite du texte. En effet, l'invention tire profit d'un mode d'émission-réception d'un type particulier qui sera décrit ci-dessous.

De plus en plus de personnes, que ce soit pour un usage professionnel ou privé, veulent pouvoir être jointes où qu'elles se trouvent. Le téléphone mobile est une solution à ce problème mais le signal de sonnerie, qui est le plus souvent utilisé pour signaler un appel entrant, est très bruyant et susceptible de gêner les personnes qui se trouvent à proximité, à des spectacles, dans les moyens de transport ou des lieux publics. Un signal lumineux tel que l'éclairement de l'écran d'affichage du combiné qui apporte moins de nuisance pour l'entourage peut aussi être utilisé pour signaler un appel entrant, mais dans ce dernier cas, l'appel peut être manqué car l'appareil n'est pas en permanence dans le champ de vision de son utilisateur. On notera que la signalisation sonore et lumineuse coexistent le plus souvent dans l'appareil, avec la possibilité d'inhiber le mode de signalisation de sonnerie par appui sur une touche.

Pour résoudre le problème technique indiqué ci-dessus, il est connu un autre mode de signalisation d'ordre tactile, constitué par un vibreur déclenché sur appel entrant, au même titre que le signal sonore ou lumineux précités. Le vibreur, constitué par une masselotte excentrée sur l'axe d'un micromoteur électrique, est souvent placé dans l'équipement lui-même (le combiné mobile) ou dans le boîtier de la batterie du combiné, étant d'ailleurs alimenté par cette batterie. Cependant, les vibrations ne sont pas toujours ressenties par l'utilisateur qui porte son appareil dans une poche ou un étui accroché à un vêtement. En fait, les vibrations transmises par l'équipement ont un effet très faible parce qu'il n'y a guère de contact direct entre l'équipement et son utilisateur et, là encore, l'appel entrant peut rester ignoré et par suite, manqué.

La technique consistant à utiliser un vibreur a pu être améliorée par le fait que des étuis de transport spéciaux sont utilisés pour protéger l'équipement contre des rayures, cabossages et autres déformations dues à des chutes le plus souvent. Dans ce dernier cas il a été imaginé, comme décrit dans le brevet US-A 5 551 079 d'incorporer le vibreur, avec sa batterie d'alimentation propre, d'ailleurs, à la pince de fixation de l'étui, à accrocher à une ceinture ou au bord d'un pantalon ou d'une jupe. Pour que le vibreur puisse fonctionner, lorsque le combiné est dans son étui, il faut que deux contacts électriques soient établis entre le vibreur et le combiné, lors de l'introduction de ce dernier dans l'étui, pour que l'information d'un appel entrant se traduise par un bouclage électrique entre le vibreur et sa batterie, bouclage qui provoque le fonctionnement du vibreur. Dans ces conditions, la pince, qui est appliquée contre la hanche du porteur, transmet la vibration à coup sûr.

Cependant, la résolution des deux problèmes techniques précités qui consistent à ne pas gêner l'entourage et à ne pas manquer un appel entrant, telle qu'enseignée par le brevet US précité, présente un inconvénient: à savoir que l'étui avec sa pince et le combiné doivent être conçus et fabriqués les uns pour les autres pour que l'établissement de deux bons contacts électriques soit réalisé lors de la mise en place du combiné dans son étui.

Un but de l'invention est de réaliser un vibreur de signalisation d'appel pour téléphone mobile numérique pour lequel rien n'a été spécialement prévu à cet effet.

Un autre but de l'invention est de réaliser un vibreur de signalisation d'appel pour téléphone mobile qui se déclenche par influence électromagnétique lors d'une émission hertzienne suffisamment prolongée d'un téléphone mobile placé à proximité immédiate du vibreur.

Un autre but de l'invention est d'incorporer à la pince d'un étui pour téléphone mobile un vibreur de signalisation d'appel sensible au signal hertzien émis par le mobile lorsque ce dernier est dans son étui.

Ces buts sont atteints et les inconvénients de l'art antérieur sont atténués ou supprimés grâce au fait que le dispositif à vibreur indiqué au premier paragraphe est remarquable en ce qu'il comporte en outre une antenne destinée à capter, à proximité immédiate du combiné, les impulsions d'émission porteuses d'information numérique à haute fréquence dudit combiné, et un circuit électronique qui sélectionne dans ladite émission le signal à basse fréquence de récurrence desdites impulsions d'émission et qui, après amplification dudit signal à basse fréquence, actionne ledit moteur électrique.

Comme un mobile à la norme GSM émet sur une fréquence porteuse de 900 MHz, une antenne de 8 cm de longueur convient pour le dispositif à vibreur. Pour un mobile à la norme DCS qui émet à la fréquence double de 1800 MHz, il faut une antenne de 4 cm.

D'autre part, la puissance d'émission du mobile est faible, de l'ordre de 1 à 2 watts et pour que le circuit électronique du dispositif de vibreur puisse rester simple et bon marché, on prévoit qu'il ne puisse se déclencher que lorsqu'il est à proximité immédiate, soit à quelques centimètres seulement. Ceci est bien le cas en l'occurrence, puisque le déclenchement doit se produire seulement lorsque le mobile est dans son étui. Si tel n'était pas le cas, c'est-à-dire si la portée de détection était plus grande (de l'ordre de plusieurs dizaines de centimètres) de faux appels pourraient en effet être détectés, dus à des déclenchements provoqués par des mobiles voisins (ce qui serait très probable dans une foule notamment). Comme décrit plus loin, le circuit électronique, qui sélectionne et amplifie le signal à basse fréquence des impulsions de signal de données compressé à haute fréquence, peut être simple et se réduire à seulement 3 transistors, 3 ou 4 diodes, une résistance et un condensateur.

De préférence, le dispositif à vibreur de l'invention est rendu très compact et robuste, étant constitué par l'ensemble aggloméré au moyen d'une matière plastique rigide d'une pile électrique (de 1,5 V de préférence), d'un circuit imprimé qui supporte ledit circuit électronique selon la technique CMS et ledit moteur électrique.

En variante, l'antenne peut être appliquée ou cousue dans un des bords longitudinaux de l'étui, ce dernier pouvant être rigide, ou souple de préférence.

De préférence, le dispositif de vibreur est fixé fermement contre la branche libre, à l'intérieur de la pince d'étui du téléphone mobile.

La description qui suit en regard des dessins annexés, le tout donné à titre d'exemple non limitatif, fera bien comprendre comment l'invention peut être réalisée.
La figure 1 est le schéma d'un dispositif à vibreur selon l'invention.
La figure 2 est le schéma d'un circuit électronique qui convient pour le dispositif à vibreur selon l'invention.
La figure 3A représente un dispositif à vibreur selon l'invention incorporé à de la matière plastique.
La figure 3B représente le dispositif de la figure 3A solidarisé à une pince d'étui pour téléphone mobile numérique.

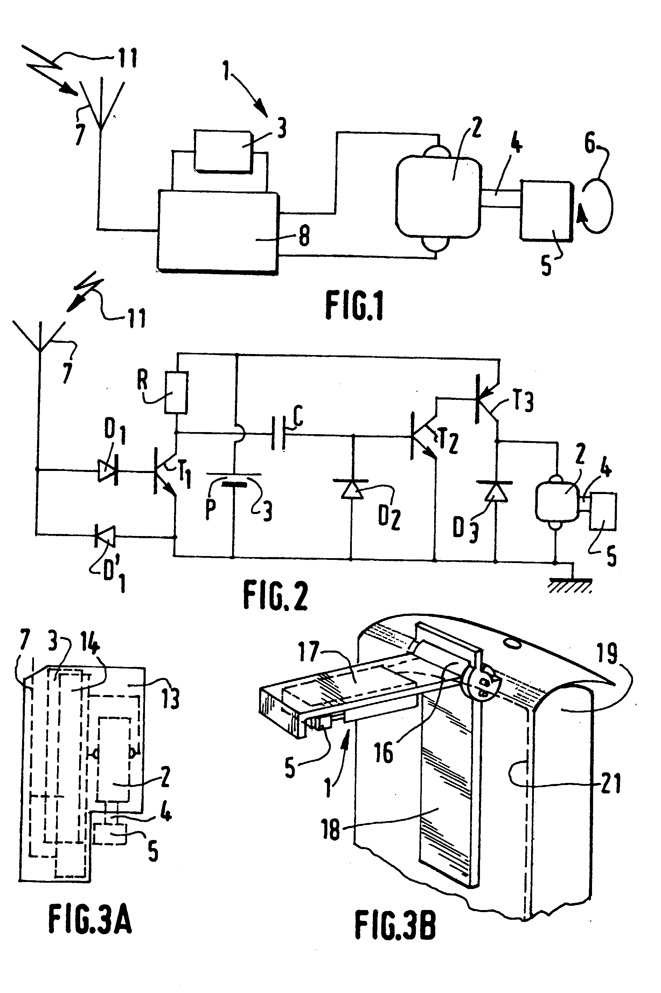

Le dispositif 1 de la figure 1 comporte de façon connue un moteur électrique à courant continu 2 qui peut être alimenté par une source d'énergie électrique 3, une pile de 1,5 Volts de préférence, le moteur 2 fonctionnant sous une tension nominale de 1,2 Volts. L'arbre 4 du moteur supporte une masselotte 5 décentrée qui constitue le vibreur proprement dit lorsqu'elle est entraînée en rotation, comme indiqué par la flèche 6. Selon l'invention, le dispositif 1 comporte aussi une antenne 7, reliée à un circuit électronique 8 qui est alimenté par la source 3 et relié aux bornes d'alimentation du moteur 2.

Le dispositif de la figure 1 est sensible à un signal particulier référencé 11, qui lorsqu'il est détecté par l'antenne 7 et traité par le circuit 8, provoque l'alimentation du moteur 2 à partir de la source 3. Ce signal particulier est celui qui est émis à courte distance, de l'ordre de quelques centimètres, typiquement 7 cm, par un combiné de téléphone mobile numérique de type GSM ou DCS notamment, qui émet à une fréquence porteuse égale à 900 MHz pour le GSM ou à 1800 MHz pour le DCS ; en conséquence la longueur de l'antenne 7, qui peut consister en un simple brin de cuivre, est égale à 8 cm, respectivement 4 cm selon la norme à prévoir. Etant donné qu'en numérique le signal peut, avantageusement, être compressé, l'émission du mobile se fait par impulsions courtes à une basse fréquence de récurrence de 217 Hz par exemple pour le GSM. Le circuit électronique 8 a pour fonction de sélectionner ce signal à basse fréquence et de déclencher en conséquence l'alimentation du moteur 2, pendant tout le temps où le signal précité est capté par l'antenne 7 avec un niveau de puissance suffisant comme expliqué ci-dessous en référence à la figure 2.

A la figure 2, l'antenne 7 est reliée par une première diode D₁ dans le sens passant à la base d'un premier transistor PNP, T1. Le transistor T1 a son collecteur relié, par l'intermédiaire d'une résistance R au pôle positif de la source d'énergie électrique 3 qui est en l'occurrence une pile de tension Vbat égale à 1,5 Volts référencée P, et son émetteur au pôle négatif de la pile P (à la masse). Le collecteur de T₁ est aussi relié à la première armature d'un condensateur C dont la deuxième armature est reliée d'une part à la masse par l'intermédiaire d'une deuxième diode D₂ dans le sens non passant et à la base d'un deuxième transistor PNP, T₂. T₂ a son émetteur relié à la masse et son collecteur relié à la base d'un troisième transistor NPN, T₃. T₃ a son émetteur relié au pôle positif de P et son collecteur relié par l'intermédiaire du montage en parallèle du moteur 2 et d'une troisième diode D₃ dans le sens non passant à la masse.

L'antenne 7 étant à un potentiel flottant capte l'onde 11 (figures 1, 2) composée d'impulsions en provenance d'un téléphone mobile très proche. Cette onde est assimilable à un courant alternatif qui peut donc être positif ou négatif. Lors d'une phase positive du signal d'antenne, la diode D1 devient passante et débloque le transistor T1, ce qui fait passer la tension sur la première armature du condensateur C de Vbat à zéro. La deuxième armature se trouve portée à un potentiel négatif et le condensateur C se charge partiellement, à travers D₂ pendant la durée de l'impulsion qui maintient T₁ débloqué. A la fin de l'impulsion, le collecteur de T₁ repasse à la tension Vbat et la deuxième armature de C à une tension légèrement positive, insuffisante cependant pour débloquer le transistor T₂. A chaque impulsion positive du signal, la tension positive sur la base de T₂ augmente légèrement. Au bout d'un nombre suffisant d'impulsions T₂ est débloqué, débloquant à son tour T₃, et pendant la durée qui sépare deux impulsions positives successives le condensateur C se décharge légèrement à travers le trajet base émetteur de T₂. Pendant cette durée, le moteur 2 est alimenté en courant continu sous sa tension nominale ; pendant chaque impulsion suivante, la diode de roue libre D₃ permet au courant de continuer à circuler dans le moteur 2 qui est assimilable à une charge inductive. Le vibreur 5 est ainsi actionné pendant tout le temps que le mobile proche émet, ce qui est le cas lors d'un appel entrant. On notera que pendant l'état de veille, le mobile émet aussi par intermittence pour actualiser sa position, mais les trains d'impulsions à 900 MHz (respectivement 1800 MHz) ne sont pas assez longs pour pouvoir débloquer le transistor T₂, le temps nécessaire étant de l'ordre de 1 s, soit 200 impulsions, et le condensateur C a le temps de perdre sa charge partielle entre deux trains d'impulsions. La diode D'1 a pour fonction de protéger le transistor T1 lorsque des pics d'impulsions négatives sont captés par l'antenne 7. Le signal à 217 Hz est ainsi démodulé pour actionner le vibreur 5. Les composants choisis pour le fonctionnement du circuit de la figure 2 sont par exemple les suivants :
Diodes D₁, D'₁, D₂, D₃ : 1N4148
Transistors T₁ : BC 548C T₂: BC548 T₃: BC558
Condensateur C: 1 µF

Le moteur fonctionne sous une tension nominale de 1,2 V et la pile P est du type 1,5 MA, son autonomie étant de l'ordre de 2 à 3 ans. La consommation de la commande du vibreur est très faible (environ 0,5 µA). Pour cette raison, l'ensemble du dispositif peut être aggloméré au moyen d'une matière plastique, une résine thermodurcissable notamment, comme représenté à la figure 3A où seul le vibreur 5 et l'axe 4 du moteur ne sont pas au contact de la matière plastique rigide 13, alors que la pile 3, l'antenne 7, le circuit électronique 14 et le moteur 2 y sont noyés. On obtient ainsi un dispositif rigide et robuste, qu'il est facile de solidariser, par tout moyen connu, à la branche mobile d'une pince d'étui de téléphone mobile, comme représenté à la figure 3B. De préférence, le circuit électronique 14, figure 3A est réalisé sur une carte de circuit imprimé selon la technique dite CMS (Composants Montés en Surface). L'antenne peut se réduire à un simple brin de cuivre ; de préférence elle est disposée selon un arc de cercle, supérieur à 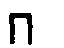 .

A la figure 3B une pince 16 destinée à pincer une ceinture ou le bord d'un habit tel que pantalon ou jupe comporte une branche mobile 17 destinée à passer du côté intérieur de la ceinture ou de l'habit. Cette branche 17 comporte, du côté intérieur à la pince, le dispositif de la figure 3A, auquel elle est solidarisée, par tout moyen connu, de façon telle que le vibreur 5 soit disposé, avec liberté de rotation, pour toutes les positions de la pince, à proximité de l'extrémité libre de la branche 17. L'autre branche 18 de la pince peut être rendue solidaire d'un étui ou sacoche 19 ou bien recevoir directement un combiné de téléphone mobile (non représenté), des moyens d'accrochage adaptés étant alors prévus sur la pince et sur le combiné. L'antenne 7 du dispositif 1 peut être noyée dans de la matière plastique comme indiqué sur la figure 3A. Elle peut aussi être libre ; si tel est le cas et si la pince comporte un étui 19, il est avantageux de disposer l'antenne du dispositif selon l'invention le long d'un bord, à l'intérieur de l'étui, comme représenté en 21, en trait interrompu sur la figure 3B.

Le circuit électronique 8 (figure 1) est conçu pour déclencher le vibreur 5 pour la puissance d'émission la plus faible à prévoir pour le mobile, de l'ordre de 1 W. Pour que ce soit le cas, il faut que l'antenne du mobile et celle du dispositif à vibreur soient très proches l'une de l'autre, soit 3 à 4 cm de distance. Ceci est bien réalisé avec l'agencement décrit en référence à la figure 3B et présente l'avantage de ne pas avoir de déclenchements intempestifs qui seraient dus au fonctionnement d'autres téléphones mobiles proches. On notera que le fonctionnement du circuit 8 présente une hystérésis, c'est-à-dire qu'après déclenchement du vibreur et prise en main du mobile en vue de répondre à un appel entrant il faut atteindre une distance d'éloignement entre les deux appareils de l'ordre de 10 à 15 cm pour que le dispositif de vibreur cesse de fonctionner. Ce phénomène d'hystérésis n'est pas gênant dans la mesure où la distance qui sépare la taille et la tête d'un individu dépasse nettement 15 cm.

Le dispositif selon l'invention est aussi applicable aux téléphones sans fils, dit encore résidentiels, pourvu qu'ils soient numériques, avec des normes d'émission comparables à celles décrites ci-dessus, comme le DECT notamment. Cependant, vu la proximité presque immédiate qui sépare un combiné de téléphone sans fil de sa base, la puissance d'émission du combiné est faible, de l'ordre de 0,5 W. Pour conserver les distances à respecter précitées pour le déclenchement et l'arrêt du dispositif à vibreur décrit ci-dessus, il faut prévoir des composants, diodes et transistors plus sensibles et avec des seuils de tension de déclenchement plus faibles que ceux indiqués en référence à la figure 2.

Tel que décrit ci-dessus, le dispositif selon l'invention est apte à fonctionner pour la sélection de plus de 5000 appels, ce qui lui donne une espérance de vie de l'ordre de plusieurs années, comparable à celle du mobile.

## Revendications

1. Dispositif à vibreur pour la signalisation tactile d'un appel entrant, dans un combiné de téléphone mobile numérique, comportant une source d'énergie électrique à fournir à un moteur électrique actionnant un vibreur, caractérisé en ce qu'il comporte en outre une antenne destinée à capter, à proximité immédiate du combiné, les impulsions d'émission porteuses d'information numérique à haute fréquence dudit combiné, et un circuit électronique qui sélectionne dans ladite émission le signal à basse fréquence de récurrence desdites impulsions d'émission et qui, après amplification dudit signal à basse fréquence, actionne ledit moteur électrique.

2. Dispositif à vibreur selon la revendication 1 destiné à un téléphone mobile à la norme GSM (respectivement DCS), caractérisé en ce qu'il comporte une antenne de longueur 8 cm (respectivement 4 cm) et qu'il est destiné à être rendu solidaire d'une pince d'accrochage d'un étui pour mobile au niveau de la taille du porteur.

3. Dispositif à vibreur selon la revendication 1 ou 2, caractérisé en ce que ledit circuit électronique comporte entre ladite antenne et ledit moteur électrique, une première diode D1 dans le sens passant, le montage en série entre ladite source et la masse d'une résistance R et du trajet collecteur-émetteur d'un premier transistor NPN T₁ dont la base est reliée à la cathode de D₁, un condensateur C, une deuxième diode D₂, un deuxième transistor NPN T₂, le montage en série entre ladite source et la masse du trajet émetteur-collecteur d'un troisième transistor PNP T₃ et dudit moteur électrique du vibreur qui comporte une diode D₃ dite de roue libre, ledit condensateur C ayant une armature reliée au collecteur de T₁ et l'autre armature reliée à la cathode de D₂, dont l'anode est à la masse, et à la base de T₂ qui est relié par son collecteur à la base de T₃.

4. Dispositif à vibreur selon l'une des revendications 1 à 3, caractérisé en ce qu'il est constitué par l'ensemble aggloméré au moyen d'une matière plastique rigide, une résine thermodurcissable notamment d'une pile électrique, d'un circuit imprimé qui supporte ledit circuit électronique selon la technique CMS et ledit moteur électrique.

5. Dispositif à vibreur selon l'une des revendications 1 à 4, caractérisé en ce qu'il comporte en outre, avec son antenne, la branche mobile d'une pince d'étui de téléphone mobile conçue pour accrocher ledit étui à la ceinture ou à un vêtement au niveau de la taille d'une personne, branche libre à l'intérieur de laquelle il est solidarisé.

6. Dispositif à vibreur selon la revendication 5, caractérisé en ce que ladite antenne s'étend le long d'un bord dudit étui.
